# EUROPEAN PATENT SPECIFICATION

(11) **EP 2 848 832 B1**
(45) Date of publication and mention of the grant of the patent: **16.01.2019**
(21) Application number: 14171138.2
(22) Date of filing: 04.06.2014
(51) Int. Cl.: F16C 35/063

(54) **Shaft supporting structure and method for manufacturing shaft supporting device**
Wellenunterstützungsstruktur und Verfahren zur Herstellung der Wellenunterstützungsvorrichtung
Structure de support d'arbre et procédé de fabrication d'un dispositif de support d'arbre

(30) Priority: 29.07.2013 JP 2013157086
(43) Date of publication of application: 18.03.2015
(73) Proprietor: Sumitomo Heavy Industries, Ltd., Tokyo 141-6025 (JP)
(72) Inventor: Abe, Shun, Aichi, 474-0024 (JP); Tamenaga, Jun, Aichi, 474-0024 (JP); Shizu, Yoshitaka, Aichi, 474-0024 (JP)
(74) Representative: Klang, Alexander H.

(56) References cited:
- EP-A2- 0 378 978
- WO-A1-2008/087749
- JP-A- H0 544 788
- US-A- 5 735 612
- US-A1- 2008 264 202

## Description

### BACKGROUND OF THE INVENTION

### Field of the Invention

The present invention relates to a shaft supporting structure and a method for manufacturing a shaft supporting device.

### Description of Related Art

JP H05-44788 A discloses a shaft supporting structure illustrated in Fig. 6 according to the preamble of claim 1.

An output shaft 912 has a bearing placement unit 920, which is integrated with a carrier 918 of a planetary reduction gear mechanism 916, and is supported at a casing 926 by a ball bearing 914 incorporated into the bearing placement unit 920.

A retaining ring groove 928 is formed on an anti-reduction mechanism side (opponent member side) of the ball bearing 914 of the output shaft 912. An axial-direction movement of an inner ring 914A of the ball bearing 914 on the output shaft 912 is regulated by a retaining ring 930 that is fitted into the retaining ring groove 928.

In the structure of JP H05-44788 A, an outer diameter d1 of the bearing mounting portion 920 of the ball bearing 914 is set to be approximately double an outer diameter d2 of a driven shaft connection portion 912A where the output shaft 912 is connected to the opponent member. Accordingly, sufficient strength is ensured in the output shaft 912 although the retaining ring groove 928 is formed.

However, in the case of the supporting structure that supports the shaft with the bearing, a sufficiently large shaft diameter is not always ensured at a part where the bearing is placed, as illustrated in JP H05-44788 A, due to design constraints such as the sizes of the other members and the entire device and connection with the opponent member.

US 2008/264202 A1 discloses a hypoid gear motor which has a gear casing, first and second bearings, a motor having a motor shaft, a hypoid pinion having a penetration hole and a tooth flank on an outer periphery thereof, with the motor shaft fitted into the penetration hole, a hypoid gear shaft having a hypoid gear which meshes with the hypoidpinion, and two ends respectively supported on the gear casing via the first and second bearings, and first and second shim members arranged adjacent to the first and second bearings, respectively. The first and second shim members independently adjust a position of the hypoid gear shaft in an axial direction thereof with respect to the hypoid pinion and the gear casing.

US 5, 735, 612 A discloses a bearing for enabling an axle shaft to rotate in a housing. The bearing includes a cup which is attached to the housing, a cone which fits over the axle shaft, and tapered rollers arranged in a single row between tapered raceways on the cup and cone. The cup has a thrust rib at the large diameter end of its raceway, while another thrust rib is located at the small diameter end of the cone raceway. The arrangement is such that the bearing transmits radial loads and thrust loads in both directions. In one direction the thrust loads are taken on the raceways; in the other through the ribs. The cup contains an oblique bore which opens toward the axis of rotation beyond the small diameter end of the cup raceway, and this bore contains a speed sensor. An excitor ring rotates with the cone immediately inwardly from the speed sensor, and it has disruptions which cause the sensor to produce a pulsating signal, the frequency of which reflects the angular velocity. The excitor ring may be part of a rib ring that fits over the axle shaft and against the end of the cone, or it may be on a locking collar that fits over the axle shaft and against the end of the cone. The cone may be an integral part of the axle shaft with its raceway being a surface on the axle shaft.

EP 0 378 978 A2 discloses a toothed transmission gear incorporating two cooperating gear wheels, one of which during operation performs a tapering pendulum movement (nutation) . The pendulum gear wheel is locked against rotation. The gear wheels are supported on a common shaft for making possible a clearance-free and temperature independent gear meshing.

WO 2008/087749 A1 discloses that a state of meshing between worm teeth and a worm wheel is kept substantially constant irrespective of the direction of power transmission. This realizes a structure in which steering force is less likely to change depending on the rotation direction of a steering wheel and in which uncomfortable noise and vibration do not occur. An elastic holding member is installed between the outer peripheral surface of an outer ring, which forms a rolling bearing for supporting an end of a worm shaft, and the inner peripheral surface of a holding cylindrical part. The elastic holding member has a semi-cylindrical part and a pair of elastic arm parts extending from both ends, in the circumferential direction, of the semi-cylindrical part to the worm wheel side. A half part of the outer ring, which half part is on the opposite side of the worm wheel, is held by the semi-cylindrical part, and the ends of the pair of elastic arm parts are elastically brought into contact with the inner peripheral surface of the holding cylindrical part. With this constitution, the end of the worm shaft is less likely to be displaced in the axial direction of the worm wheel.

### SUMMARY OF THE INVENTION

The present invention has been made in view of the above-described problem, and an object thereof is to provide a shaft supporting structure that is capable of supporting a shaft with high reliability in strength without having to increase the diameter of the shaft more than necessary, and a method for manufacturing a shaft supporting device.

According to the present invention, there is provided a shaft supporting structure as set forth in claim 1. Preferred embodiments of the present invention may be gathered from the dependent claims.

In the case of a configuration in which a retaining ring groove for locking the retaining ring or a screw for screwing the bearing nut is formed in the shaft, variations in strength (divergence between calculated strength and actual strength) increase, and it becomes extremely difficult to design a proper strength.

In the present invention, a "weak portion," where the variations in the strength are small, is intentionally formed on the shaft, and the vicinity of the retaining ring groove or the screw of the bearing nut, where the variations in the strength are large, is configured not to be the weakest portion of the shaft in design. In this manner, the shaft can be supported with the high reliability in the strength, without having to increase the diameter of the shaft more than necessary, even in a case where the component with the large variations is formed on the shaft.

According to another aspect of the present disclosure not part of the invention, there is provided a shaft supporting structure that supports a shaft with a bearing which has an inner ring, in which a collar is fixed to the shaft with an adhesive, and an axial-direction movement of the inner ring of the bearing is regulated by the collar.

In this configuration, the formation itself of the component with the large variations in the strength is omitted in regulating the axial-direction movement of the inner ring of the bearing. In addition, the collar is fixed to the shaft through adhesion to regulate the axial-direction movement of the inner ring of the bearing. The shaft can be supported with the high reliability in the strength, without having to increase the diameter of the shaft more than necessary, in the same manner as above.

According to the present invention, a shaft can be supported with high reliability in strength without having to increase the diameter of the shaft more than necessary.

### BRIEF DESCRIPTION OF THE DRAWINGS

Fig. 1 is a cross-sectional view illustrating a shaft supporting structure according to an exemplary embodiment of the present invention.
Fig. 2 is a cross-sectional view illustrating a main part of Fig. 1.
Fig. 3 is a cross-sectional view illustrating a main part of another shaft supporting structure not part of the invention.
Fig. 4 is a cross-sectional view illustrating a main part of a modification example of Fig. 3.
Fig. 5 is a cross-sectional view illustrating a main part of another modification example of Fig. 4.

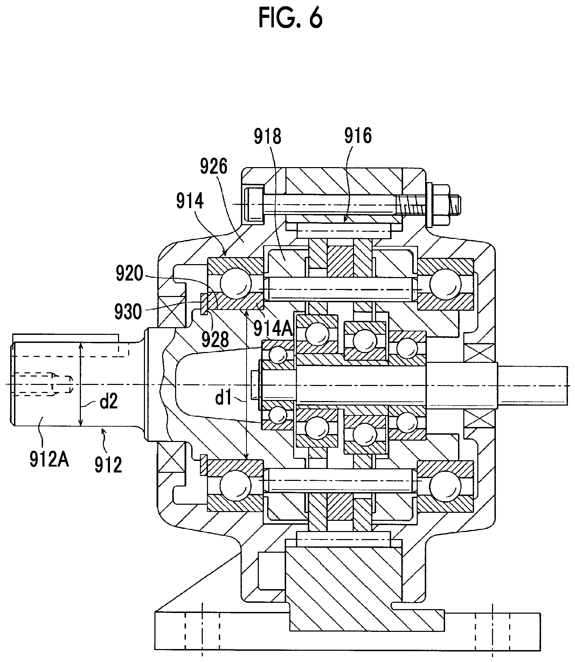

Fig. 6 is a cross-sectional view of a reduction gear illustrating an example of a shaft supporting structure of the related art.

### DETAILED DESCRIPTION OF THE INVENTION

Hereinafter, a shaft supporting structure according to an exemplary embodiment of the present invention will be described in detail with reference to the accompanying drawings.

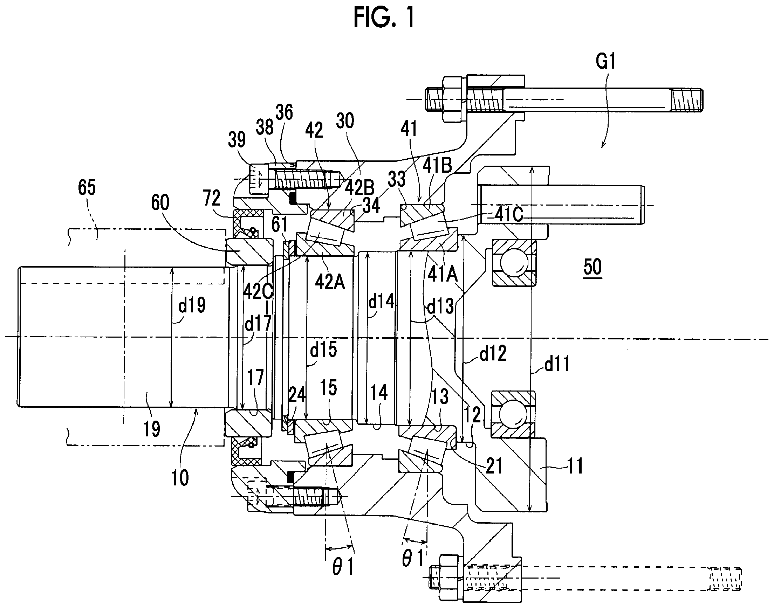

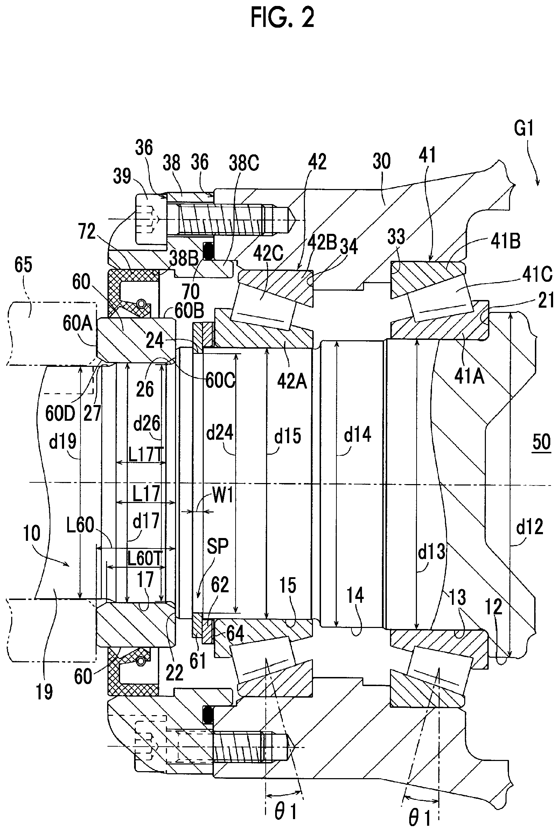

Fig. 1 is a view illustrating an example of the shaft supporting structure that is applied to a reduction gear (partially illustrated) G1. Fig. 2 is a view of a main part thereof.

An output shaft 10 is supported at a casing 30 by first and second tapered roller bearings 41 and 42. The first and second tapered roller bearings 41 and 42 respectively have inner rings 41A and 42A and outer rings 41B and 42B, and a plurality of tapered rollers 41C and 42C, which are rolling elements, are incorporated between the inner rings 41A and 42A, and the outer rings 41B and 42B. The first and second tapered roller bearings 41 and 42 are placed back to back with a contact angle θ1.

The output shaft 10 has a plate portion 11 that corresponds to a carrier of a reduction mechanism (partially illustrated) 50, first and second large diameter portions 13 and 15 where the first and second tapered roller bearings 41 and 42 are respectively placed, a small diameter portion 17 where a collar 60 is placed, and a driven shaft connection portion 19 that is connected to a driven shaft 65 of an opponent member (partially illustrated) . The outer diameter of the plate portion 11 is d11 (refer to Fig. 1), the respective outer diameters of the first and second large diameter portions 13 and 15 are d13 and d15, the outer diameter of the small diameter portion 17 is d17, and the outer diameter of the driven shaft connection portion 19 is d19. The diameters decrease in this order (d11>d13>d15>d17>d19).

In this embodiment, the output shaft 10 has a first intermediate portion 12 with an outer diameter d12 between the plate portion 11 with the outer diameter d11 and the first large diameter portion 13 with the outer diameter d13, and d11>d12 >d13. A first step portion 21, which is formed by a diameter difference (d12-d13), is disposed between the first intermediate portion 12 and the first large diameter portion 13. The first step portion 21 regulates an axial-direction movement of the inner ring 41A of the first tapered roller bearing 41 to the reduction mechanism 50 side.

In addition, the output shaft 10 has a second intermediate portion 14 with an outer diameter d14 between the first large diameter portion 13 with the outer diameter d13 and the second large diameter portion 15 with the outer diameter d15, and d13>d14>d15.

Further, a retaining ring groove 24 with an axial-direction width W1 and a bottom portion diameter d24 is formed in the second large diameter portion 15 (where the second tapered roller bearing 42 is placed) of the output shaft 10. A retaining ring 61 is fitted into the retaining ring groove 24. The retaining ring 61 regulates an axial-direction movement of the inner ring 42A of the second tapered roller bearing 42 to an anti-reduction mechanism side.

More specifically, in this embodiment, a spacer 62, which is relatively wide in width, is placed between the retaining ring 61 and the inner ring 42A of the second tapered roller bearing 42, and a shim 64, which is narrower in width than the spacer 62, is placed on an anti-retaining ring side (second tapered roller bearing 42 side) of the spacer 62. In other words, the retaining ring 61 regulates the axial-direction movement of the inner ring 42A of the second tapered roller bearing 42 to the anti-reduction mechanism side via the spacer 62 and the shim 64.

The output shaft 10 has the small diameter portion 17 adjacent to the second large diameter portion 15 where the second tapered roller bearing 42 is placed. A second step portion 22 is formed between the second large diameter portion 15 and the small diameter portion 17. The collar 60 is fitted into the small diameter portion 17 through interference fitting. Chamfered portions 60C and 60D are formed on inner circumferential sides of both axial-direction ends of the collar 60. A rounded portion 26 with an outer diameter (d26) that is smaller than the outer diameter d17 of the small diameter portion 17 is formed in an end portion of the small diameter portion 17 on the second large diameter portion 15 side. The chamfered portion 60C of the collar 60 on a reduction mechanism side is positioned on a radial-direction outer side of the rounded portion 26.

A rounded portion 27 is formed between the small diameter portion 17 and the driven shaft connection portion 19. An axial-direction length L60 of the collar 60 is greater than an axial-direction length L17 of the small diameter portion 17. To be more precise, an interference fit possible range L60T between the chamfered portion 60C and the chamfered portion 60D of the collar 60 is wider than an interference fit possible range L17T between the rounded portion 27 and the rounded portion 26 of the small diameter portion 17. In other words, the chamfered portion 60C of the collar 60 on the reduction mechanism side is positioned on the radial-direction outer side of the rounded portion 26, and the interference fit possible range L60T of the collar 60 is fitted with the small diameter portion 17 of the output shaft 10 at an axial-direction position including the entire range of the interference fit possible range L17T of the small diameter portion 17.

In this embodiment, a part of the driven shaft 65 of the opponent member abuts directly against an opponent member side end portion 60A of the collar 60.

In this embodiment, the calculated strength of the vicinity of the retaining ring groove 24 (hereinafter, referred to as a retaining ring portion SP for convenience) is Sc1. The small diameter portion 17 a) has the outer diameter d17 that is smaller than the outer diameter d15 of the second large diameter portion 15 where the second tapered roller bearing 42 is placed (d17<d15), and b) has the collar 60 press-fitted thereinto, and c) the rounded portion 26 with the outer diameter d26 that is even smaller than the outer diameter d17 of the small diameter portion 17 is formed on the second large diameter portion 15 side of the small diameter portion 17. Due to the configurations a), b), and c), the calculated strength Sc2 of the small diameter portion 17 is set to be lower than the calculated strength Sc1 of the retaining ring portion SP (Scl>Sc2). In other words, the calculated strength Sc2 of the small diameter portion 17 is set to be smaller than the calculated strength Sc1 of the retaining ring portion SP, and the retaining ring portion SP is designed not to be the weakest portion of the output shaft 10 in design (calculation) . A technical significance of this configuration will be described later.

In this embodiment, the casing 30 of the reduction gear G1 has a third step portion 33 at an axial-direction position corresponding to the first tapered roller bearing 41. The third step portion 33 of the casing 30 regulates an axial-direction movement of the outer ring 41B of the first tapered roller bearing 41 to the anti-reduction mechanism side. In addition, the casing 30 has a fourth step portion 34 at an axial-direction position corresponding to the second tapered roller bearing 42. The fourth step portion 34 of the casing 30 regulates an axial-direction movement of the outer ring 42B of the second tapered roller bearing 42 to the reduction mechanism side.

In addition, a ring-shaped attachment member 38 is connected, with a bolt 39, to an axial-direction end portion 36 of the casing 30. An O-ring 70 is interposed between the attachment member 38 and the axial-direction end portion 36 of the casing 30. An oil seal 72 is placed between an outer circumference 60B of the collar 60 and an inner circumference 38B of the attachment member 38. The O-ring 70 and the oil seal 72 seal an inner portion of the casing 30 of the reduction gear G1.

A protruding portion 38C, which protrudes to the reduction mechanism side, is formed on an inner circumferential side of the attachment member 38. The protruding portion 38C constitutes a spigot joint portion of the attachment member 38 with respect to the casing 30.

Hereinafter, an effect of the shaft supporting structure will be described.

Firstly, a resolution principle according to this embodiment will be described.

Examples of structures for regulating an axial-direction movement of a bearing that supports a shaft by using a "retaining ring" include 1) a technique for regulating a movement of an outer ring of the bearing by forming a retaining ring groove on a support base side (casing 30 side in this embodiment) and using the retaining ring which is fitted into the retaining ring groove from a radial-direction inner side, and 2) a technique for regulating a movement of an inner ring of the bearing by forming a retaining ring groove on a supported shaft side (output shaft 10 side in this embodiment) and using the retaining ring which is fitted into the retaining ring groove from a radial-direction outer side.

The technique 1), in which the retaining ring groove is formed on the support base side, is unlikely to cause a significant problem associated with strength. However, in a case where the technique 2), in which the retaining ring groove is formed on the shaft side, is adopted as in this embodiment in view of constraints such as the placement of members, the size as a whole, and the order of the assembly, the strength of the shaft may be significantly reduced due to the retaining ring groove that is formed.

What is problematic herein is that it is difficult to predict the degree of the reduction in the strength during the actual driving due to the formation of the retaining ring groove. More specifically, significant variations make a prediction extremely difficult about, for example, "the adequacy of bearing shim adjustment in a case where the retaining ring groove with this width and this depth is formed on a surface of the shaft by this processing method with this processing machine and with this processing error after this heat treatment or surface treatment is performed on this material with this diameter and in a situation where various load torques are applied under various use environments, and the maximum degree of the reduction in the strength that can be generated in actuality in a case where the shaft rotates out of position by this degree."

However, the strength that guarantees "no breakdown in non-exceptional situations" has to be ensured, even in a situation where the degree of the reduction in the strength is unlikely to be predicted in a state of actual use, if the product is to be established. This, as a result, has led to a more-than-necessary increase in the diameter of the retaining ring portion, the selection of a material with more-than-necessary excellence in strength, the performance of the heat treatment with more-than-necessary caution, or the necessity of actual breakdown tests under certain conditions, which have resulted in an inevitable increase in cost and weight.

In contrast, according to this embodiment, the "weak portion" is formed by using a proven structure and the retaining ring portion SP is configured not to be the weakest portion of the shaft in calculation. In this manner, this embodiment addresses the above-described situations.

Hereinafter, the effect of this embodiment will be described more specifically.

According to this embodiment, the calculated strength of the retaining ring portion SP (or the strength according to a computer simulation) is Sc1. However, an actual strength Sr1 of the retaining ring portion SP has significant variations as described above, and it is difficult for a designer to predict the actual strength Sr1 in advance.

The small diameter portion 17 according to this embodiment a) has the outer diameter d17 that is smaller than the outer diameter dl5 of the second large diameter portion 15 where the second tapered roller bearing 42 is placed, and b) has the collar 60 press-fitted thereinto, and c) the rounded portion 26 with the outer diameter d26 that is even smaller than the outer diameter d17 of the small diameter portion 17 is formed on the second large diameter portion 15 side of the small diameter portion 17.

The configurations a), b), and c), without exception, cause the strength of the small diameter portion 17 to be smaller than the strength of the retaining ring portion SP. As a result, the calculated strength Sc2 of the small diameter portion 17 is set to be lower than the calculated strength Sc1 of the retaining ring portion SP (Sc1>Sc2). In other words, in this embodiment, the retaining ring portion SP is not the "weakest portion of the shaft" in calculation.

With regard to the reduction in the strength due to the configurations a), b), and c), the structure of the small diameter portion 17 has little strength variations from processing variations and use environments and the divergence between the calculated strength Sc2 and an actual strength Sr2 is small. Accordingly, the actual strength Sr2 can be estimated with high accuracy.

In particular, in the case of this embodiment, the axial-direction length L60 of the collar 60 is greater than the axial-direction length L17 of the small diameter portion 17, and the interference fit possible range L60T of the collar 60 is fitted with the small diameter portion 17 of the output shaft 10 at the axial-direction position including the entire range of the interference fit possible range L17T of the small diameter portion 17. In other words, the collar 60 is configured to be capable of uniformly applying a pressing force from the interference fitting to the entire small diameter portion 17 in the axial direction. Accordingly, the accuracy of the estimation can be further increased. As such, the design of the strength of the small diameter portion 17 for "no breakdown in non-exceptional situations" becomes somewhat easier.

It is considerable that a sufficient actual strength is ensured even for the retaining ring portion SP, the calculated strength of which is higher than that of the small diameter portion 17, if the small diameter portion 17 is a portion weaker in calculation than the retaining ring portion SP and a sufficient actual strength is ensured for the small diameter portion 17. In this manner, load of design can be significantly reduced, the increase in cost and weight can be suppressed to the minimum and, in particular, a supporting structure for the output shaft 10 with extremely high reliability in strength can be obtained without having to cause the more-than-necessary increase in the diameter of the output shaft 10.

Focusing only on the formation of the part with less calculated strength than the retaining ring portion SP, basically the configuration a), in which the small diameter portion 17 with the outer diameter d17 that is smaller than the outer diameter d15 of the second large diameter portion 15 is formed, suffices by itself. However, with the configuration a) alone, a significant diameter difference is required in actuality. Accordingly, a) +b), that is, a combination of the condition where the diameter is small (d15>d17) with the condition where the collar 60 is press-fitted is optimal.

The configuration c), that is, the formation of the rounded portion 26 with the outer diameter d26 that is smaller than the outer diameter d17 of the small diameter portion 17 in the end portion of the small diameter portion 17 on the second large diameter portion 15 side is advantageous in that the weak portion can be formed without having to increase the diameter difference (or without having to cause any increase in the diameter difference). Still, the configuration c) may not be essential if the shaft diameter and the strength that are required can be achieved with only the configurations a) and b).

In this embodiment, the spacer 62 that is wide in width and the shim 64 that is narrow in width are placed, in pairs, between the retaining ring 61 and the inner ring 42A of the second tapered roller bearing 42. Furthermore, the spacer 62 is placed at a position close to the retaining ring groove 24. Accordingly, the shim 64 does not fall into the retaining ring groove 24 during the assembly even when the shim 64 itself is thin. From this point of view, the spacer becomes unnecessary in a case, for example, where the shim 64 itself is formed to be wide enough not to fall into the retaining ring groove 24 (a single shim suffices) .

According to this embodiment, a supporting structure that can further stabilizes the rotation of the output shaft 10 and is excellent in noise reduction, vibration reduction, and bearing life extension can be obtained because proper shim adjustment is performed. In other words, pressurizing forces of the first and second tapered roller bearings 41 and 42 can be optimally adjusted, since the proper shim adjustment is performed, unlike in a case where the output shaft 10 rotates out of position to increase the possibility of significant stress concentration in the retaining ring portion SP and increasing variations in the reduction in the strength. In this manner, the output shaft 10 can rotate stably in position (variations in the reduction in the strength can be suppressed in the retaining ring portion SP), and the supporting structure with excellent strength can be obtained.

In addition, in this embodiment, a part of the driven shaft 65 of the opponent member abuts directly against the opponent member side end portion 60A of the collar 60. As such, a thrust force from the opponent member side can be received by the collar 60.

Examples of techniques that are in wide use for regulating the axial-direction movement of the bearing include not only the technique in which the retaining ring is used as in the above-described embodiment but also a technique in which a so-called bearing nut is incorporated. However, in a case where the axial-direction movement of the inner ring of the bearing is regulated by the bearing nut, a screw for screwing the bearing nut has to be formed on the outer circumference of the shaft. The screw for screwing the bearing nut also entails the significant variations in the actual strength due to the formation and the extremely significant divergence between the calculated strength and the actual strength. From this point of view, it can be said that the screw has the same problem as the retaining ring groove.

In other words, the configuration in which "the shaft has the large diameter portion where the bearing is placed and the small diameter portion that is disposed to be adjacent to the large diameter portion, and the collar is fitted into the small diameter portion through the interference fitting" can be similarly applied to a case where the axial-direction movement of the inner ring of the bearing is regulated by the bearing nut, as in the case where the axial-direction movement of the inner ring of the bearing is regulated by the retaining ring, can achieve a similar effect.

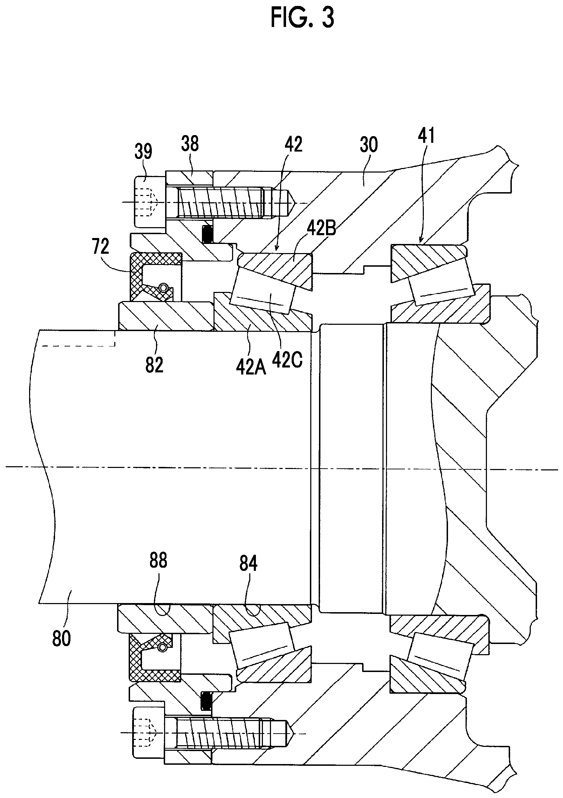

Next, another shaft supporting structure not part of the invention will be described with reference to Fig. 3.

In this example, the formation itself of "uncertainty elements" such as the retaining ring groove and the screw, which have significant variations in the strength, in an output shaft 80 is avoided. In other words, neither the retaining ring groove nor the screw is formed in the output shaft 80. Instead, a collar 82 is fixed to the output shaft 80 with an adhesive, and the axial-direction movement of the inner ring 42A of the second tapered roller bearing 42 is regulated by the collar 82.

The output shaft 80 has no particular diameter difference (same diameter) between a placement unit 84 for the second tapered roller bearing 42 and a placement unit 88 for the collar 82.

Both the number of components and the number of processing steps are small in this configuration, and thus allows a reasonable design at an extremely low cost in, for example, applications in which no large thrust load is applied to the shaft. In addition, the absence of the diameter difference results in a more compact size and a light weight.

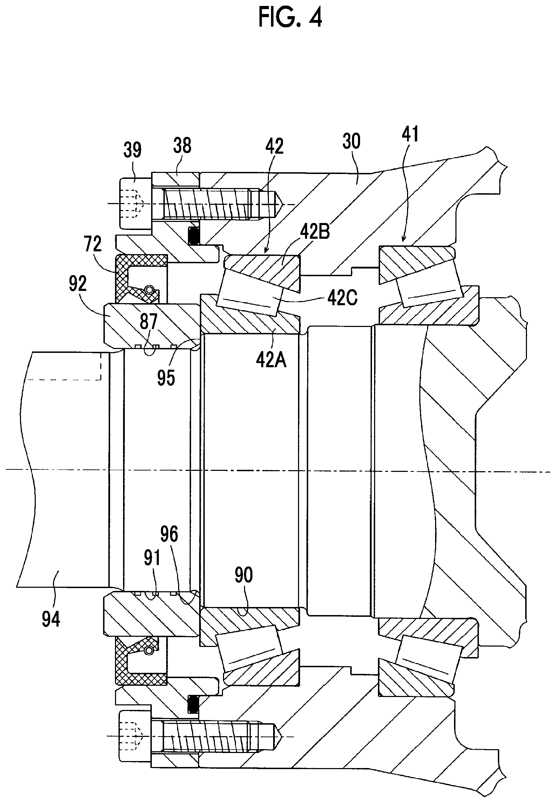

Fig. 4 illustrates a modification example of Fig. 3.

In Fig. 4, an output shaft 94 has a large diameter portion 90 where the second tapered roller bearing 42 is placed and a small diameter portion 91 that is disposed to be adjacent to the large diameter portion 90, and a collar 92 is fixed (with an adhesive) to the small diameter portion 91.

Even in the configuration example of Fig. 4, the output shaft 94 does not have the "uncertainty elements" such as the retaining ring groove and the screw with the significant variations in the strength. Accordingly, the "step portion" does not have to be designed from the point of view that "the weakest portion is formed intentionally."

However, in a case where the collar 92 is configured to be fixed to and abut against a step portion 95, which is formed by the large diameter portion 90 and the small diameter portion 91, as illustrated in the example of Fig. 4, an axial-direction position of the collar 92 on the output shaft 94 can be determined with high accuracy. In other words, a pressurizing force with a proper manufacturing error level can be easily applied to the first and second tapered roller bearings 41 and 42 by simply pushing the collar 92, to which the adhesive is applied, until abutting against the step portion 95 of the large diameter portion 90 and the small diameter portion 91. Accordingly, the stable supporting structure less likely to be out of position can be obtained with ease.

In the configuration examples of Figs. 3 and 4, the collars 82 and 92 may be incorporated with the adhesive, through the interference fitting, in a case, for example, where the adhesive alone is unlikely to sufficiently receive the thrust force of the output shafts 80 and 94. In this manner, the movement of the inner ring 42A of the second tapered roller bearing 42 can be regulated with a stronger binding force.

In a case where the collars 82 and 92 are incorporated through the interference fitting, the adhesive may be pushed out during the incorporation. Effective with regard to this point is a "reservoir groove" for the adhesive that is disposed between the output shafts 80 and 94 and the collars 82 and 92. For example, a rounded portion 96 that is smaller in outer diameter than the small diameter portion 91 is formed in an end portion of the small diameter portion 91 on the large diameter portion 90 side and the rounded portion 96 is used as an example of the reservoir groove for adhesive used in the case of the example of Fig. 4. In the example of Fig. 4, a circumferential-direction reservoir groove 87 is also formed on an inner circumference of the collar 92. However, the form of the reservoir groove is not limited to the configuration example described above. For example, the reservoir groove may be formed into a spiral shape . In addition, the reservoir groove may be formed only on the collar side, may be formed only on the shaft side, may be formed on both the collar and the shaft, and may not be formed at all.

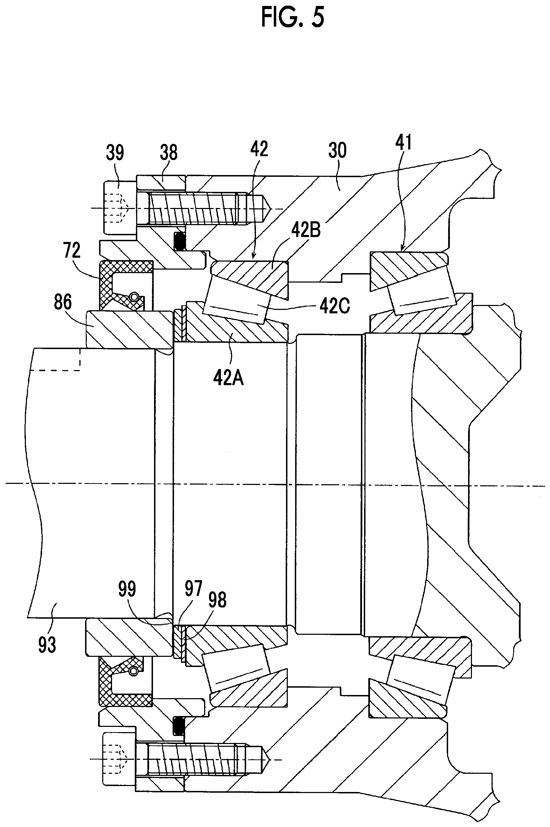

Fig. 5 illustrates another modification example of Fig. 4.

In the configuration example of Fig. 5, a spacer 97 and a shim 98 are placed between a collar 86 and the inner ring 42A of the second tapered roller bearing 42 unlike in the configuration example of Fig. 4. According to this configuration, an axial-direction position of the collar 86 is determined by a step portion 99, and then the shim 98 is adjusted. Accordingly, pressurizing forces of the first and second tapered roller bearings 41 and 42 can be optimally adjusted while considering a manufacturing error.

The incorporation of the shim 98 in pairs with the spacer 97 instead of an incorporation of the shim 98 as a single body is to prevent the thin shim 98 from falling from the step portion 99, which has the same intention as the embodiment of Figs. 1 and 2 above. Accordingly, even in this example of Fig. 5, the shim 98 itself may be designed as a single member that is relatively wide in width and the spacer may be omitted. In both cases, the numbers of the shim and the spacer that are incorporated for pressurization adjustment, which have different widths, do not have to be one each, and a desired thickness may be adjusted and ensured by combining two or more shims or spacers.

In a case where the configuration according to the example of Fig. 5 is adopted to fix the collar 86 to an output shaft 93 with the adhesive and optimally adjust the pressurization of the first and second tapered roller bearings 41 and 42 by using the spacer 97 and the shim 98 (or the shim as the single body), an incorporation method may be adopted in which a dummy collar is removed to fit and fix the collar 86, to which the adhesive is applied, after performing the shim adjustment by fitting the dummy collar (not illustrated) capable of regulating the axial-direction movement of the inner ring 42A to the output shaft 93 and causing the dummy collar to abut against the step portion 99, that is, after rearranging a "shim with a different thickness" that is placed between the dummy collar and the inner ring 42A or incorporating "a plurality of shims with different thicknesses" and finding the one or two or more shims (or spacers) that apply the optimal (proper) pressurizing forces to the first and second tapered roller bearings 41 and 42. The adhesive may be applied to the output shaft 93 side, or may be applied to both the collar 86 and the output shaft 93. In other words, the adhesive may be interposed between the collar 86 and the output shaft 93. The optimal shim adjustment can be performed with greater ease when the dummy collar is put with a dimension for a clearance fit in a relatively wide gap with respect to the output shaft 93 (when a dummy collar that is larger in inner diameter than the collar 86 is used as the dummy collar).

The oil seal 72, including the examples of Figs. 1 to 4 above, is mounted last after fixing the collars 60, 82, 86, and 92 and then connecting the attachment member 38 to the casing 30 with the bolt 39.

In this example, press fitting-based connection and adhesive-based connection are combined, and thus a thrust supporting force can be further improved when compared to connection based only on the press-fitting.

In the examples and the embodiment described above, the output shaft of the reduction gear is supported by the pair of tapered roller bearings. However, the "shaft" according to the present invention may be an input shaft or an intermediate shaft of the reduction gear, and is not particularly limited to the output shaft. In addition, the shaft does not have to be a shaft of the reduction gear, and can be applied to any structure in which the shaft is supported by a bearing having an inner ring, examples of which include a connection shaft supporting structure that connects a device and another device with each other.

In addition, the bearing is not limited to the tapered roller bearing, and may be an angular ball bearing as an example of a bearing that requires the application of the pressurization, or may be a ball bearing in general with a contact angle of zero degrees as an example of a bearing that does not require the application of the pressurization. In addition, in a case where a plurality of the bearings support the shaft, the present invention does not necessarily have to be applied to all of the bearings and may be applied to one of the bearings, which is apparent from the examples described above. The invention is defined by the appended claims only.

## Claims

1. A shaft supporting structure (G1) comprising:
a shaft (10); and
a bearing (41, 42) that supports the shaft (10);
wherein the bearing (41, 42) has an inner ring (41A, 42A) that is externally fitted to the shaft (10),
wherein the shaft (10) includes a large diameter portion (13, 15) where the bearing (41, 42) is placed, and a small diameter portion (17) that is disposed to be adj acent to the large diameter portion (13, 15) and has an outer diameter (d17) smaller than that (d13, dl5) of the large diameter portion (13, 15),
wherein the large diameter portion (13, 15) includes a retaining ring groove (24) or a screw portion,
wherein an axial-direction movement of the inner ring (41A, 42A) of the bearing (41, 42) is regulated by a retaining ring (61) fitted in the retaining ring groove (24) or a bearing nut screwed to the screw portion,
**characterised in that**
a collar (60) is fitted into the small diameter portion (17) through interference fitting.

2. The shaft supporting structure (G1) according to claim 1,
wherein a spacer (62) and a shim (64) are placed between the retaining ring (61) or the bearing nut and the inner ring (41A, 42A) of the bearing (41, 42).

3. The shaft supporting structure according to claim 1 or 2,
wherein a first rounded portion (26), which is smaller in diameter (d26) than the small diameter portion (17), is formed in an end portion of the small diameter portion (17) on the large diameter portion side,
wherein a first chamfered portion (60C) is formed on an inner circumference of an end of the collar (60) on the large diameter portion side, and
wherein the first chamfered portion (60C) is positioned on a radial-direction outer side of the first rounded portion (96) .

4. The shaft supporting structure according to any one of claims 1 to 3,
wherein the shaft (10) includes a driven shaft connection portion (19) that is disposed to be adj acent to the small diameter portion (17) and has an outer diameter (d19) smaller than that (d17) of the small diameter portion (17),
wherein a second rounded portion (27) is formed between the small diameter portion (17) and the driven shaft connection portion (19),
wherein a second chamfered portion (60D) is formed on an inner circumference of an end of the collar (60) on the driven shaft connection portion side, and
wherein the second chamfered portion (60D) is positioned on a radial-direction outer side of the second rounded portion (27) .

5. The shaft supporting structure according to any one of claims 1 to 4,
wherein an axial-direction length (L60) of the collar (60) is greater than an axial-direction length (L17) of the small diameter portion (17).

6. The shaft supporting structure according to claim 5,
wherein the shaft (10) includes a driven shaft connection portion (19) that is disposed to be adj acent to the small diameter portion (17) and has an outer diameter (d19) smaller than that (d17) of the small diameter portion (17),
wherein the collar (60) protrudes from the small diameter portion (17) toward the driven shaft connection portion side,
wherein an opponent member (65) that is connected to the driven shaft connection portion (19) abuts against a driven shaft connection portion side end surface (60A) of the collar (60).

## Patentansprüche

1. Wellenunterstützungsaufbau (G1), der Folgendes aufweist:
eine Welle (10); und
ein Lager (41, 42), das die Welle (10) stützt bzw. trägt;
wobei das Lager (41, 42) einen Innenring (41A, 42A) aufweist, der von außen auf die Welle (10) gepasst ist,
wobei die Welle (10) einen Teil (13, 15) mit großem Durchmesser aufweist,
auf dem das Lager (41, 42) angeordnet ist, und einen Teil (17) mit kleinem Durchmesser, der angrenzend an den Teil (13, 15) mit großem Durchmesser angeordnet ist und einen Außendurchmesser (d17) aufweist, der kleiner als der (d13, d15) des Teils (13, 15) mit großem Durchmesser ist,
wobei der Teil (13, 15) mit großem Durchmesser eine Halteringnut (24) oder
einen Schneckenteil aufweist,
wobei eine Axialrichtungsbewegung des Innenrings (41A, 42A) des Lagers (41, 42) durch einen Haltering (61) reguliert wird, der in die Halteringnut (24) gepasst ist oder eine Lagermutter auf den Schneckenteil geschraubt ist,
**dadurch gekennzeichnet, dass**
ein Bund (60) in den Teil (17) mit kleinem Durchmesser durch Presspassung gepasst ist.

2. Wellenunterstützungsaufbau (G1) gemäß Anspruch 1, wobei ein Abstandshalter (62) und eine Unterlegscheibe (64) zwischen dem Haltering (61) oder der Lagermutter und dem Innenring (41A, 42A) des Lagers (41, 42) angeordnet sind.

3. Wellenunterstützungsaufbau gemäß Anspruch 1 oder 2, wobei ein erster abgerundeter Teil (26), der einen kleineren Durchmesser (d26) als der Teil (17) mit kleinem Durchmesser aufweist, in einem Endteil des Teils (17) mit kleinem Durchmesser auf der Seite des Teils mit großem Durchmesser gebildet ist,
wobei ein erster abgeschrägter Teil (60C) auf einem Innenumfang eines Endes des Bunds (60) auf der Seite des Teils mit großem Durchmesser gebildet ist, und
wobei der erste abgeschrägte Teil (60C) auf einer Radialrichtungsaußenseite des ersten abgerundeten Teils (96) positioniert ist.

4. Wellenunterstützungsaufbau gemäß einem der Ansprüche 1 bis 3,
wobei die Welle (10) einen Verbindungsteil (19) der angetriebenen Welle aufweist, der so angeordnet ist, dass er angrenzend an den Teil (17) mit kleinem Durchmesser ist, und einen Außendurchmesser (d19) aufweist, der kleiner als der (d17) des Teils (17) mit kleinem Durchmesser ist,
wobei ein zweiter abgerundeter Teil (27) zwischen dem Teil (17) mit kleinem Durchmesser und dem Verbindungsteil (19) der angetriebenen Welle gebildet ist,
wobei ein zweiter abgeschrägter Teil (60D) auf einem Innenumfang eines Endes des Bunds (60) auf der Seite des Verbindungsteils der angetriebenen Welle gebildet ist, und
wobei der zweite abgeschrägte Teil (60D) auf einer Radialrichtungsaußenseite des zweiten abgerundeten Teils (27) positioniert ist.

5. Wellenunterstützungsaufbau gemäß einem der Ansprüche 1 bis 4,
wobei eine Axialrichtungslänge (L60) des Bunds (60) größer als eine Axialrichtungslänge (L17) des Teils (17) mit kleinem Durchmesser ist.

6. Wellenunterstützungsaufbau gemäß Anspruch 5,
wobei die Welle (10) einen Verbindungsteil (19) der angetriebenen Welle aufweist, der angrenzend an den Teil (17) mit kleinem Durchmesser angeordnet ist und einen Außendurchmesser (d19) aufweist, der kleiner als der (d17) des Teils (17) mit kleinem Durchmesser ist,
wobei der Bund (60) von dem Teil (17) mit kleinem Durchmesser zu der Seite des Verbindungsteils der angetriebenen Welle vorragt,
wobei ein Gegenglied (65), das mit dem Verbindungsteil (19) der angetriebenen Welle verbunden ist, an eine Seitenendoberfläche (60A) des Verbindungsteils der angetriebenen Welle des Bunds (60) anstößt.

## Revendications

1. Structure de support d'arbre (G1) comprenant :
un arbre (10) ; et
un roulement (41, 42) qui supporte l'arbre (10) ;
le roulement (41, 42) ayant une bague intérieure (41A, 42A) qui est extérieurement montée sur l'arbre (10),
l'arbre (10) comprenant une partie de grand diamètre (13, 15) où le roulement (41, 42) est placé, et une partie de petit diamètre (17) qui est disposée pour être adjacente à la partie de grand diamètre (13, 15) et a un diamètre externe (d17) plus petit que celui (d13, d14) de la partie de grand diamètre (13, 15),
la partie de grand diamètre (13, 15) comprenant une rainure d'anneau de retenue (24) ou une portion de vis,
un mouvement dans la direction axiale de la bague intérieure (41A, 42A) du roulement (41, 42) étant régulé par un anneau de retenue (61) ajusté dans la rainure d'anneau de retenue (24) ou un écrou de roulement vissé à la portion de vis,
**caractérisé en ce que**
un collier (60) est ajusté dans la partie de petit diamètre (17) par ajustement serré.

2. Structure de support d'arbre (G1) selon la revendication 1,
dans laquelle une entretoise (62) et une cale (64) sont placées entre le l'anneau de retenue (61) ou l'écrou de roulement et la bague intérieure (41A, 42A) du roulement (41, 42).

3. Structure de support d'arbre selon la revendication 1 ou 2,
dans laquelle une première portion arrondie (26), dont le diamètre (d26) est inférieur à celui de la partie de petit diamètre (17), est formée dans une portion d'extrémité de la partie de petit diamètre (17) du côté de la partie de grand diamètre,
une première portion chanfreinée (60C) étant formée sur la circonférence interne d'une extrémité du collier (60) du côté de la partie de grand diamètre, et
la première portion chanfreinée (60C) étant positionnée sur un côté extérieur en direction radiale de la première portion arrondie (96).

4. Structure de support d'arbre selon l'une quelconque des revendications 1 à 3,
dans laquelle l'arbre (10) comprend une portion de connexion d'arbre entrainé (19) qui est disposée pour être adjacente à la partie de petit diamètre (17) et a un diamètre externe (d19) inférieur à celui (d17) de la partie de petit diamètre (17),
une deuxième portion arrondie (27) étant formée entre la partie de petit diamètre (17) et la portion de connexion d'arbre entrainé (19),
une deuxième portion chanfreinée (60D) étant formée sur la circonférence interne d'une extrémité du collier (60) du côté de la portion de connexion d'arbre entrainé, et
la deuxième portion chanfreinée (60D) étant positionnée sur un côté extérieur en direction radiale de la deuxième portion arrondie (27).

5. Structure de support d'arbre selon l'une quelconque des revendications 1 à 4,
dans laquelle une longueur (L60) du collier (60) dans une direction axiale est supérieure à une longueur (L17) de la portion de petit diamètre (17) dans la direction axiale.

6. Structure de support d'arbre selon la revendication 5,
dans laquelle l'arbre (10) comprend une portion de connexion d'arbre entrainé (19) qui est disposée pour être adjacente à la partie de petit diamètre (17) et a un diamètre externe (d19) inférieur à celui (d17) de la partie de petit diamètre (17),
le collier (60) faisant saillie de la partie de petit diamètre (17) du côté de la portion de connexion d'arbre entrainé,
un élément opposé (65) qui est connecté à la portion de connexion d'arbre entrainé (19) étant en butée contre une surface d'extrémité (60A) du collier (60) du côté de la portion de connexion d'arbre entrainé.
